# EUROPEAN PATENT SPECIFICATION

(11) **EP 3 115 427 B1**
(45) Date of publication and mention of the grant of the patent: **18.04.2018**
(21) Application number: 16178442.6
(22) Date of filing: 07.07.2016
(51) Int. Cl.: C09D 15/00, C09D 17/00, C08K 3/00, B27K 3/50, B27K 3/00, B27K 3/52

(54) **METHOD FOR PREPARING A PIGMENT COMPOSITION FOR WOOD AND USE OF THE PIGMENT COMPOSITION**
VERFAHREN ZUR HERSTELLUNG EINER PIGMENTZUSAMMENSETZUNG FÜR HOLZ SOWIE VERWENDUNG DER PIGMENTZUSAMMENSETZUNG
PROCÉDÉ DE PRÉPARATION D'UNE COMPOSITION DE PIGMENT POUR LE BOIS ET UTILISATION DE LA COMPOSITION DE PIGMENT

(30) Priority: 10.07.2015 NO 20150908
(43) Date of publication of application: 11.01.2017
(73) Proprietor: Marnar Bruk AS, 4534 Marnardal (NO)
(72) Inventor: Birkeland, Espen, 4532 Øyslebø (NO)
(74) Representative: Håmsø Patentbyrå AS

(56) References cited:
- EP-A1- 0 149 625
- CN-A- 102 585 701
- CN-A- 104 403 466
- US-A- 4 919 721

## Description

The invention relates to a pigment composition. More particularly, the invention relates to an oil based pigment composition for wood and a method for making the composition. The composition is suitable for staining of wet wood in a process where the composition is added to the surface of the wood at sub-atmospheric conditions whereby the pigments and oil penetrate into the wood. The oil based pigment composition is also suitable for traditional painting of wood.

Paint is an exterior coating with limited penetration of wood. Focus is on curing of a protective polymeric film that incorporates other ingredients such as pigments, onto the surface. Coating formulation is "painted" onto the surface. Application of a pressure or a vacuum is not required.

Impregnation treatment means immersing the wood in an impregnation liquor. Then pressure and / or vacuum is used to effect some impregnation of the impregnation liquor into at least the wood surface layers. There is less or no reliance on fast curing / cross-linking of an exterior film.

A "Royal Treatment" regime or a "royal-process" is a known and documented set of procedures for treating and protecting wood / timber intended for outdoor use. Such wood / timber may be wood paneling on facades. This treatment was originally developed by Bror Olof Häger and is disclosed in the patent documents US 4305978 and GB 2088422.

The process is a combined process and can be summarized as follows: A water-based, copper-salt-impregnation is followed by a hot, approximately 80°C, oil-impregnation, which often utilizes modified linseed oil or mixes of linseed oil with other oils, including mineral derived oils. Significant for the "royal-process" is that it involves a sequence of two process steps. In most cases, different vessels are used for each step.

### Step 1. Water-based copper treatment

This step is often based on a modified "Lowry process". This typically involves a pressure phase where the wood / timber is covered by an aqueous copper solution and exposed to a pressure exceeding 9 bar for approximately 1 hour. Thereafter the wood / timber is exposed to a sub-atmospheric pressure for approximately 20 min.

### Step 2. Oil-impregnation

Wood / timber from step 1 is covered with hot oil at sub-atmospheric pressure. The aim is to dry the wood / timber from nearly wet state to a moisture content from 12% to 18%, and to hydrophobize the surface in order to prevent leaching of preservatives. Typically the pressure is about 200 mbar and the oil is linseed oil heated to about 80°C. Step 2 lasts for several hours. In the following, the oil added at step 2 is named a treatment oil. The treatment oil may be a single pure oil or a blend of two or several oils. This step is also named the oil and pigment impregnation stage in the "royal process" sequence.

Pigments, in the art named a tone paste, may be added to the treatment oil in order to impart a final color to the wood / timber. Ideally the oil and the pigments penetrate a number of millimeters into the wooden substrate. This is usually done by blending a pigment mix into the treatment oil. Such pigments are commercially available and supplied as a "tone paste package" for direct addition to, and mixing with the treatment oil. Dispersion agents for the pigments are often supplied as an integral part of the tone paste package. The pigments are typically iron oxide, titanium dioxide, carbon black and blends of these pigments. A tone paste package suitable for dispersion in non-aqueous systems may contain pigments, aldehyde or other resins, xylene or white spirit, dispersants / surfactants / wetting agents, and dispersion stabilizers.

Such tone paste packages formulations are normally mixed into the treatment oil prior to wood treatment. Depending on the specific pigment contents of the actual tone paste package, the preferred level of addition of the tone paste package often falls in the range 2 wt% - 8 wt%, preferably 4 wt% - 6.5 wt% of the total treatment formulation for the wood. Total treatment formulation means the treatment oil, which may be a blend of oils, and any additives to the treatment oil used in step 2.

In spite of careful adherence to the instructions provided by tone paste package producers regarding mixing techniques and mixing conditions, the inventor has observed that considerable separation and uneven distribution of the pigments in the total treatment formulation can be encountered.

Particular problems may for example be encountered during application of a grey color to wood using a specific grey color tone paste package dispersed in treatment oil. A grey color tone paste package will typically comprise titanium dioxide, TiO₂, and carbon black as pigments. However, application of other colors can also be problematic with uneven distribution and even streaking of colors on a wood surface after treatment and product drying.

Studies have shown that this is due to separation of the pigments within the applied dispersion, i.e. the mix of treatment oil and tone paste package, or during actual wood treatment, i.e. during step 2, leading to uneven distribution of color when applied to wood and after product drying. This is connected to the overall stability of the pigment / oil mix after mixing in of the tone paste package formulation itself, or indeed mixing in of the tone paste package into the treatment oil. Such instability and uneven treatment is observed by the appearance of uneven coloring, streaking or even formation of intense color spotting on the wood surface. Furthermore, color can quickly disappear from the treated wood, reflecting uneven application during the "royal-process".

Patent document US 4919721 discloses air-drying stains and finishing coats for wood. The stains and coats comprises a mixture of modified natural oils and an extender. The extender comprises a fine, cryptocrystalline amorphous silicon dioxide. For exterior finishes a spotty or mottled appearance of a dried surface is avoided by use of the stain. Patent document CN 102585701 discloses a paint based on vegetable oils, vegetable wax and beeswax. The paint comprises from 0 to 1 percent of bentonite. Patent document CN 104403466 discloses a composition for an indoor coating. The coating has high adhesive force. The coating contains 0.7 parts of bentonite of a total of 16.8 parts of ingredients.

The invention has for its object to remedy or to reduce at least one of the drawbacks of the prior art, or at least provide a useful alternative to prior art.

The object is achieved through features, which are specified in the description below and in the claims that follow.

The inventor have found that the problem of uneven coloring, streaking or spotting is solved by adding a pigment mix, or a tone paste package together with a stabilizing component. During mixing of the pigments with an oil, the blend is also thickened and stabilized. The stabilizing component comprises inorganic particulates and organically modified inorganic particulates. Bentonite type clays and the like such as tonstein have been found to be suitable stabilizers.

Bentonite is classified as an absorbent aluminum phyllosilicate clay, consisting of mainly montmorinollite. Bentonite may be modified organically as known in the art, e.g. by use of a quaternary alkyl-ammonium compound. The organically modified bentonite is suitable for dispersion in no-polar to medium polar solvents and liquid systems. Bentonite may be a sodium bentonite, a calcium bentonite or a potassium bentonite. For example, commercially available products such as "Bentone® 34", "Bentone SD® 1", "Viscogel® ED", Viscogel® ED2, Viscogel® S4 or Viscogel® SD are suitable bentonite derived materials for the application. These are not limiting examples as organically modified clays suitable for addition to oil-based systems and low-medium polarity oil and solvent blends are suitable.

Bentonites and organically modified bentonites are used as rheological additives in paints. They act as gels and are used as thickeners to make the paint thixotropic. This adds anti-sagging properties to the paint.

In a process using sub-atmospheric pressure for impregnation of a wood surface, it is desirable that the total treatment formulation has a low viscosity. Thereby the total treatment formulation can better penetrate into the pores. It is therefore surprising that an additive which increases the viscosity of the total treatment formulation, can be used as a pigment stabilizer in the last stage of a wood impregnation process such as "royal process".

The inventor have further found that the method of mixing and the stage in the process were the mixing takes place, are critical factors in achieving stability of the pigment mix in the oil.

In the following, an inorganic particulate shall mean bentonite, tonstein, clay or silica. In the following, an organically modified inorganic particulate shall mean bentonite, tonstein, clay or silica and which has been treated with a suitable chemical such as a quaternary alkyl-ammonium compound. In the following, a stabilizing particulate is used as a name for an inorganic particulate and an organically modified inorganic particulate.

An efficient way to achieve this stabilization was found to be the production of a "pre concentrate" as a first step. An aliquot of the treatment oil may be provided. The treatment oil may be a pure single oil, such as linseed oil, or a mixture of two or several oils as explained previously. The aliquot may as an alternative be an oil different from the treatment oil. In the following, an oil aliquot is used as the general term for the possible options.

The "pre concentrate" was made by blending the stabilizing particulate with the oil aliquot. The stabilizing particulate, was blended into the oil aliquot using an intensive shear mixer. The finished "pre concentrate" may contain from 5 wt% to 25 wt% stabilizing particulate. More preferably the "pre concentrate" may contain 7 wt% to 20 wt% stabilizing particulate. Even more preferably the "pre concentrate" may contain 10 wt% to 18 wt% stabilizing particulate.

This "pre-concentrate" was then added into a bulk oil prior to wood treatment, using conventional mixing. In an alternative embodiment the "pre-concentrate" was mixed with the bulk oil by using a shear mixer. In the following a bulk oil means the treatment oil less the oil provided by the oil aliquot.

In one embodiment the tone paste package was added to the treatment oil as a final component to make the total treatment formulation. In an alternative embodiment the tone paste package was added to the "pre-concentrate" prior to adding the mix of "pre-concentrate" and tone paste package to the bulk oil.

Making the "pre concentrate" was the most efficient method to obtain a stabilized pigment composition in the total treatment formulation. However, in an alternative embodiment it is possible to stabilize the pigment composition in the total treatment formulation by adding the stabilizing particulate to the treatment oil. The total treatment oil with the stabilizing particulate is than passed through the intensive shear mixer. Thereafter the "tone paste package" is mixed in to make up the total treatment formulation.

The "pre concentrate" may be produced at a shear rate from 15 m/s to 25 m/s. The shear rate may also be above 25 m/s. Suitable equipment may be a dissolver with a dissolver plate of 100 mm run at 3000 rpm which gives a shear rate of 15.7 m/s. An alternative dissolver may have a dissolver plate of 300 mm run at 1450 rpm which gives a shear rate of 22.8 m/s. Mixing the stabilizing particulate to the treatment oil may be done at a shear rate from 20 to 35 m/s. The shear rate may also be above 35 m/s. A dissolver with a dissolver plate of 100 mm run at 6000 rpm gives a shear rate of 31.4 m/s.

In the following four different embodiments are disclosed for making the total treatment formulation.

To provide an oil aliquot means to provide a pure cooked linseed oil, or to provide a pure vegetable oil, or to provide a mineral derived oil, or to provide a mixture of cooked linseed oil and other oils, or to provide a mixture of vegetable oils and other oils, or to provide a mixture of mineral derived oils. The other oils may be mineral derived oils or other vegetable oils. An oil aliquot is sampled from this pure oil or mixture of oils.

The first, second and third embodiments have in common to provide a stabilizing particulate and to add the stabilizing particulate to the oil aliquot to make the "pre concentrate". The "pre concentrate" may contain from 5 wt% to 25 wt% stabilizing particulate. More preferably the "pre concentrate" may contain 7 wt% to 20 wt% stabilizing particulate. Even more preferably the "pre concentrate" may contain 10 wt% to 18 wt% stabilizing particulate. The oil aliquot may hold an ambient temperature. The ambient temperature may range from 10°C to 25°C. The oil aliquot may be heated. The heated oil aliquot may hold a temperature from 25°C to 150°C.

A provided tone paste package contains one or more pigments. The pigments may be one or more of iron oxide, titanium oxide and carbon black. A grey tone paste package contains titanium oxide and carbon black. A suitable tone paste package has a desired pigment composition.

As an optional action, xylene is provided and added to total treatment formulation. Xylene will ensure even dispersion and stabilization of more hydrophobic pigments such as carbon black in the total treatment formulation, for example a total treatment formulation of grey color.

A process or method for the oil treatment and coloring of impregnated wood, utilizing the new invented procedure is in a first embodiment the following sequence of actions:
Add the "pre concentrate" to the bulk oil and mix the components to make the treatment oil. The content of stabilizing particulate is in the range 0.2 wt% to 5 wt%, preferably 0.5 wt% to 3 wt%, and most preferably 1 wt% to 2 wt% of the weight of the total mixture. Thereafter provide a suitable tone paste package and mix the tone paste package with the treatment oil to make the total treatment formulation with stabilized pigments.

The provided total treatment formulation is used to treat wood. The wood may be treated according to the "royal-process" as known in the art. The wood is positioned in the treatment chamber and impregnated with an aqueous copper solution at high pressure. Thereafter heated total treatment formulation is added at a sub-atmospheric pressure as known in the art. The heated total treatment formulation may have a temperature in the range of from 50°C to 100°C. The treatment chamber may be an autoclave. The total treatment formulation may also be used in any oil based impregnation process on wood elements. The total treatment formulation may also be used as a paint for dipping or spraying or brush application.

As an alternative, wood may be treated with the provided total treatment formulation by dipping, spraying or brush application.

A process or method for the oil treatment and coloring of impregnated wood, utilizing the new invented procedure is in a second alternative embodiment the following sequence of actions:
Provide a "pre concentrate". Thereafter provide a suitable tone paste package. Mix the tone paste package with the bulk oil. Thereafter mix the "pre concentrate" with the mixture of the tone paste package and the bulk oil to make the total treatment formulation.

A process or method for the oil treatment and coloring of impregnated wood, utilizing the new invented procedure is in a third alternative embodiment the following sequence of actions:
Provide a suitable tone paste package. Mix the tone paste package with the "pre concentrate". Thereafter mix the mixture of "pre concentrate" and tone paste package with the bulk oil to create the total treatment formulation

A process or method for the oil treatment and coloring of impregnated wood, utilizing the new invented procedure is in a forth alternative embodiment the following sequence of actions:
Provide a treatment oil. Thereafter provide a suitable tone paste package. Mix the tone paste package with the treatment oil. Thereafter provide the stabilizing particulate and add the stabilizing particulate to the mixture of tone paste package and the treatment oil to create the total treatment formulation.

The provided stabilized pigment composition according to the second, third or forth embodiment may be used in the same manner as described in the first embodiment. Application of the described method according to the first, second, third and forth embodiment for preparation of the total treatment formulation, resulted in an even or homogenous dispersion in which the pigment particles were stabilized in the total treatment formulation. Even coloring was achieved on the wood surface when the total treatment formulation was added to wood in the oil and impregnation stage in the "royal-process" sequence.

Mixing of the stabilizing particulate with oil to make a stable dispersion of the stabilizing particulate was done as intensive mixing and was achieved by using a dissolver with an attached shearing mixer. Such equipment is known from the paint industry and is used for dispersion of pigments into coating formulations.

As an alternative a colloid mill, for example a "Fryma" type with milling head fitted with toothed colloid milling stator and rotor may also be used for the intensive mixing. As a further alternative a "Ytron-Z" type, shear pump set up in shearing and de-agglomerating mode, may be used. Other known types of mixers for in-line mixing may also be used.

The dissolver can be used alone, or in combination with one of the other intensive shear mixing devices, either preferably as the initial mixer, or as a follow-up to an intensive shear mixer.

As a further alternative a 3-roll mill of the type used for pigment or other particulate grinding and dispersion into a carrier fluid can be employed to aid dispersion alongside the other intensive shear mixing devices. As an even further alternative a wet mill of the type used for pigment or other particulate grinding and dispersion into a carrier fluid can be employed.

The dispersion generated via the mixing of the stabilizing particulate material with oil or a mixture of oils should be of a viscosity that is not higher than needed to pass through a 4 mm cup in maximum 100 seconds, at a temperature consistent with the operational temperature of the method.

The invention is defined by the independent patent claims. The dependent claims define advantageous embodiments of the invention.

The invention relates to a method, or sequence of steps, to achieve a stable dispersion of pigments into an oil blend, for example a linseed oil-based oil blend. The oil-based dispersion is suitable for use, for example, in the second "oil treatment" stage of a typical "royal-process" on wood, or in a stand-alone, separate penetrating, protective and decorative oil based treatment and coloring of timber / wood elements. The invention solves an often encountered problem when coloring wood using oil based treatment, which is streaking or spotting of color on the wood surface. This is due to lack of stability, during wood treatment, of a dispersion of mixed or even single pigments in the oil.

In a first aspect, the invention relates more particularly to a method for making an oil based total treatment formulation with stabilized pigments for treatment of wood surfaces, where the total treatment formulation comprises a treatment oil and a tone paste package, where the method comprises the step of
a) providing a treatment oil;
b) providing a tone paste package,
where the method further comprises the steps of:
c) providing a stabilizing particulate;
d)providing an oil aliquot;
e) mixing the stabilizing particulate with the oil aliquot in a shear mixer; and
f) mixing the blend from step e) first with a bulk oil and then add the tone paste package to make the total treatment formulation; or
f) mixing the blend from step e) first with the tone paste package and then add a bulk oil to make the total treatment formulation; or
f) mixing the blend from step e) with a blend comprising a bulk oil and a tone paste package to make the total treatment formulation.

Step e) may comprise to use a shear mixing device chosen from a group consisting of a dissolver, a toothed colloid mill, a wet mill and a shear pump, in shearing and de-agglomerating mode.

Step e) may comprise to mix the stabilizing particulate and the oil aliquot in a ratio where the mix of step e) contains stabilizing particulate from 5 wt% to 25 wt%. The mix may more preferably contain stabilizing particulate from 7 wt% to 20 wt%. The mix may even more preferably contain stabilizing particulate from 10 wt% to 18 wt%.

The method may further comprise that the total treatment formulation contains from 0.2 wt% to 5 wt% of the stabilizing particulate. The total treatment formulation may more preferably contain from 0.5 wt% to 3 wt% of the stabilizing particulate. The total treatment formulation may even more preferably contain from 1 wt% to 2 wt% of the stabilizing particulate.

The total treatment formulation described above may be used for the treatment of wood in an oil and pigment impregnating stage in a "royal-process" sequence. The total treatment formulation described above may be used for the treatment of wood in an oil based impregnation process on wood elements. The total treatment formulation described above may be used for the treatment of wood as a paint for dipping or spraying or brush application.

The stabilizing particulate may be chosen from a group consisting of sodium bentonite, calcium bentonite, potassium bentonite, silica, tonstein and organically modified inorganic bentonite to make a total treatment formulation with stabilized pigments for use in an oil based impregnation process. The oil based impregnation process may be an oil and pigment impregnation stage in a "royal process" sequence.

In the following is described an example of a preferred embodiment.

### Example 1; comparative example, prior art

A grey tone paste package was provided. A first sample was made by mixing the tone paste package with linseed oil such that the blend contained 3 wt% of the tone paste package. A second sample was made by mixing the grey tone paste package with linseed oil such that the blend contained 7 wt% of the tone paste package.

The first sample was applied to wood in a "royal-process" sequence as known in the art. The second sample was applied to wood in a "royal-process" sequence as known in the art.

It was immediately apparent for both samples that the pigments inadequately adhered to the wood. The pigments were uneven in shade with abundant streaking and spotting. This was due to separation of the pigment components. It was also observed that the linseed oil with tone paste package itself was visibly unstable with regard to pigment separation.

### Example 2

A "pre-concentrate" was made up by blending 20% by weight organically modified bentonite to linseed oil, the oil aliquot, using a Pilvad Diaf dissolver. As an alternative a Dispermat dissolver, a Torusmill dissolver or a Ytron dissolver may be used. Other known dissolvers may also be used. A combination of a dissolver and a colloid mill may also be used as is known in the art. The linseed oil was of the same batch as used in Example 1.

The mixing continued for 4 hours. Due to the mechanical action, the temperature of the blend increased from ambient temperature to about 90°C. At termination, the organically modified bentonite was homogenous distributed in the "pre-concentrate".

The "pre-concentrate" was then mixed into the remaining linseed oil, the bulk oil, in a proportion of 10 parts linseed oil to 1 part "pre-concentrate" to form a stabilized oil blend, the treatment oil. The linseed oil was of the same batch as used in Example 1.

Grey tone paste package was mixed with the treatment oil to form a total treatment formulation. The total treatment formulation contained 6% by mass of tone paste package.

The total treatment formulation was applied to the wood using a "royal-process" sequence. It was apparent that a more even grey color was imparted to the wood with no noticeable streaking or spotting of color shades. It was also observed that no visible separation of the pigments occurred within the total treatment formulation.

### Example 3; Comparative example

A "pre-concentrate" was made with the same ingredients as described in Example 2. Mixing was however carried out with a static mixer. The static mixer did not expose the organically modified bentonite to real shear forces and real grinding action.

Thereafter the example was carried out in the same manner as described in Example 2. The result was comparable to the result described in Example 1 and the result was inferior to the result described in Example 2.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Method for making an oil based total treatment formulation with stabilized pigments for treatment of wood surfaces, where the total treatment formulation comprises a treatment oil and a tone paste package, where the method comprises the steps of
a) providing a treatment oil; and
b) providing a tone paste package,
**characterised in that** the method further comprises the steps of:
c) providing a stabilizing particulate;
d) providing an oil aliquot;
e) mixing the stabilizing particulate with the oil aliquot in a shear mixer; and
f) mixing the blend from step e) first with a bulk oil and then add the tone paste package to make the total treatment formulation; or
f) mixing the blend from step e) first with the tone paste package and then add a bulk oil to make the total treatment formulation; or
f) mixing the blend from step e) with a blend comprising a bulk oil and a tone paste package to make the total treatment formulation.

2. The method according to claim 1, where step e) comprises to use a shear mixing device chosen from a group consisting of a dissolver, a toothed colloid mill, a wet mill and a shear pump, in shearing and de-agglomerating mode.

3. The method according to any of the preceding claims, where step e) comprises to mix the stabilizing particulate and the oil aliquot in a ratio where the mix of step e) contains stabilizing particulate from 5 wt% to 25 wt%.

4. The method according to claim 3, where the mix contains stabilizing particulate from 7 wt% to 20 wt%.

5. The method according to claim 4, where the mix contains stabilizing particulate from 10 wt% to 18 wt%.

6. The method according to any of the preceding claims, where the method further comprises that the total treatment formulation contains from 0.2 wt% to 5 wt% of the stabilizing particulate.

7. The method according to claim 6, where the method further comprises that the total treatment formulation contains from 0.5 wt% to 3 wt% of the stabilizing particulate.

8. The method according to claim 7, where the method further comprises that the total treatment formulation contains from 1 wt% to 2 wt% of the stabilizing particulate.

9. Use of a total treatment formulation according to any of the preceding claims for the treatment of wood in an oil and pigment impregnating stage in a "royal-process" sequence.

10. Use of a total treatment formulation according to claims 1-8, for the treatment of wood in an oil based impregnation process on wood elements.

11. Use of a total treatment formulation according to claims 1-8, for the treatment of wood as a paint for dipping or spraying or brush application.

## Patentansprüche

1. Verfahren zur Herstellung eines ölbasierten Behandlungspräparats mit stabilisierten Pigmenten für die Behandlung von Holzflächen, wobei das Gesamtbehandlungspräparat ein Behandlungsöl aufweist, sowie eine Tonpasten-Einheit, wobei das Verfahren die folgenden Schritte aufweist:
a) Bereitstellen eines Behandlungsöls; und
b) Bereitstellen einer Tonpasten-Einheit,
**dadurch gekennzeichnet, dass** das Verfahren ferner die folgenden Schritte aufweist:
c) Bereitstellen eines stabilisierenden Feststoff;
d) Bereitstellen eines Öl-Aliquots;
e) Mischung des stabilisierenden Feststoffes mit dem Öl-Aliquot in einem Schermischer; und
f) Vermengen der Mischung aus Schritt e) zuerst mit einem Massengut-Öl und anschliessend Beigabe der Tonpasten-Einheit, um das Gesamtbehandlungspräparat herzustellen; oder
f) Vermengen der Mischung aus Schritt e) zuerst mit der Tonpasten-Einheit und anschliessend Beigabe eines Massengut-Öl, um das Gesamtbehandlungspräparat herzustellen; oder
f) Vermengen der Mischung aus Schritt e) mit einer Mischung, welche ein Massengut-Öl und eine Tonpasten-Einheit enthält, um das Gesamtbehandlungspräparat herzustellen.

2. Verfahren gemäss Anspruch 1, wobei in Schritt e) eine Schermisch-Vorrichtung verwendet wird, ausgewählt aus einer Gruppe bestehend aus einem Dissolver, einer gezahnten Koloidmühle, einer Nassschrotmühle, und einer Dispergierungspumpe, in Scher- und De-Agglomerationsbetrieb.

3. Verfahren gemäss einem der vorhergehenden Ansprüche, wobei in Schritt e) der stabilisierende Feststoff mit dem Öl-Aliquot gemischt wird in einem Verhältnis, bei dem die Mischung aus Schritt e) einen stabilisierenden Feststoffgehalt von 5 Gewichtsprozent bis 25 Gewichtsprozent aufweist.

4. Verfahren gemäss Anspruch 3, wobei die Mischung einen stabilisierenden Feststoffgehalt von 7 Gewichtsprozent bis 20 Gewichtsprozent aufweist.

5. Verfahren gemäss Anspruch 4, wobei die Mischung einen stabilisierenden Feststoffgehalt von 10 Gewichtsprozent bis 18 Gewichtsprozent aufweist.

6. Verfahren gemäss einem der vorhergehenden Ansprüche, wobei das Verfahren ferner das Merkmal aufweist, dass das Gesamtbehandlungspräparat zwischen 0.2 Gewichtsprozent und 5 Gewichtsprozent des stabilisierenden Feststoffs enthält.

7. Verfahren gemäss Anspruch 6, wobei das Verfahren ferner das Merkmal aufweist, dass das Gesamtbehandlungspräparat zwischen 0.5 Gewichtsprozent und 3 Gewichtsprozent des stabilisierenden Feststoffs enthält.

8. Verfahren gemäss Anspruch 7, wobei das Verfahren ferner das Merkmal aufweist, dass das Gesamtbehandlungspräparat zwischen 1 Gewichtsprozent und 2 Gewichtsprozent des stabilisierenden Feststoffs enthält.

9. Verwendung eines Gesamtbehandlungspräparats gemäss einem der vorhergehenden Ansprüche zur Behandlung von Holz in einem Stadium der Öl- und Pigment-Imprägnierung in einer "royal-process"-Abfolge.

10. Verwendung eines Gesamtbehandlungspräparats gemäss einem der Ansprüche 1-8, zur Behandlung von Holz in einem ölbasierten Imprägnierungsverfahren auf Holzelementen.

11. Verwendung eines Gesamtbehandlungspräparats gemäss einem der Ansprüche 1-8, zur Behandlung von Holz als eine Farbe zur Auftragung durch Eintauchen, Aufsprühen oder Aufpinseln.

## Revendications

1. Un procédé de préparation d'une formulation de traitement complet à base d'huile ayant des pigments stabilisés pour le traitement de surfaces en bois, où la formulation de traitement complet comprend une huile de traitement et une charge de pâte de tonalité, où le procédé comprend les étapes de
a) fournir une huile de traitement ; et
b) fournir une charge de pâte de tonalité
**caractérisé en ce que** le procédé comprend en outre les étapes de :
c) fournir des particules stabilisantes ;
d) fournir un aliquote de huile ;
e) mélanger les particules stabilisantes avec l'aliquote de huile dans un mélangeur à cisaillement ; et
f) mélanger le mélange de l'étape e) d'abord avec une huile de volume et puis ajouter la charge de pâte de tonalité pour préparer la formulation de traitement complet ; ou
f) mélanger le mélange de l'étape e) d'abord avec la charge de pâte de tonalité et puis ajouter une huile de volume pour préparer la formulation de traitement complet ; ou
f) mélanger le mélange de l'étape e) avec un mélange comprenant une huile de volume et une charge de pâte de tonalité pour préparer la formulation de traitement complet.

2. Le procédé selon la revendication 1, où l'étape e) comprend utiliser un dispositif de mélange à cisaillement choisi d'un groupe consistant d'un dispositif de dissolution, d'un moulin colloïdal denté, d'un moulin humide et d'une pompe à cisaillement, en mode de cisaillement et dé-agglomération.

3. Le procédé selon l'une quelconque des revendications précédentes, où l'étape e) comprend mélanger les particules stabilisantes avec l'aliquote de huile dans un rapport dans lequel le mélange de l'étape e) contient les particules stabilisantes de 5% en poids à 25% en poids.

4. Le procédé selon la revendication 3, où le mélange contient les particules stabilisantes de 7% en poids à 20% en poids.

5. Le procédé selon la revendication 4, où le mélange contient les particules stabilisantes de 10% en poids à 18% en poids.

6. Le procédé selon l'une quelconque des revendications précédentes, où le procédé comprend en outre que la formulation de traitement complet contient les particules stabilisantes de 0.2% en poids à 5% en poids.

7. Le procédé selon la revendication 6, où le procédé comprend en outre que la formulation de traitement complet contient les particules stabilisantes de 0.5% en poids à 3% en poids.

8. Le procédé selon la revendication 7, où le procédé comprend en outre que la formulation de traitement complet contient les particules stabilisantes de 1% en poids à 2% en poids.

9. Une utilisation d'une formulation de traitement complet selon l'une quelconque des revendications précédentes, pour le traitement de bois dans une étape d'imprégnation à base d'huile et de pigment dans une séquence type « procédé royal ».

10. L'utilisation d'une formulation de traitement complet selon les revendications 1 à 8, pour le traitement de bois dans un procédé d'imprégnation à base d'huile sur des éléments de bois.

11. L'utilisation d'une formulation de traitement complet selon les revendications 1 à 8, pour le traitement de bois en tant que peinture pour une application par immersion ou par aspersion ou par pinceau.
